(19) **Europäisches Patentamt**

**European Patent Office**

**Office européen des brevets**

(11) Publication number: **0 265 661 B1**

(12) # EUROPEAN PATENT SPECIFICATION

(45) Date of publication of patent specification: **24.07.91**

(51) Int. Cl.⁵: **B23K 26/10**, B25J 19/00, B44B 7/00

(21) Application number: **87113776.6**

(22) Date of filing: **21.09.87**

(54) **Laser marking machine.**

(30) Priority: **06.10.86 US 915581**

(43) Date of publication of application:
**04.05.88 Bulletin 88/18**

(45) Publication of the grant of the patent:
**24.07.91 Bulletin 91/30**

(84) Designated Contracting States:
**DE ES FR GB IT SE**

(56) References cited:
**EP-A- 0 096 630     EP-A- 0 160 293**
**EP-A- 0 178 011     FR-A- 2 337 538**
**GB-A- 2 059 354     US-A- 4 626 999**
**US-A- 4 661 681**

(73) Proprietor: **Cincinnati Milacron Inc.**
**(a Delaware Corporation), 4701 Marburg Avenue**
**Cincinnati, Ohio 45209(US)**

(72) Inventor: **Bannister, Robert D.**
**6579 Windfield Court**
**Loveland Ohio 45140(US)**

(74) Representative: **Lally, William et al**
**FORRESTER & BOEHMERT Widenmayerstrasse 4/I**
**W-8000 München 22(DE)**

Rank Xerox (UK) Business Services

## Description

The invention relates generally to laser marking machines, and is particularly directed to multi-station applications through the use of a robotic machine.

Laser marking machines have been utilised for a number of years for marking a variety of workpieces, and these machines are particularly effective where it is desired to mark very hard surfaces. Laser marking machines are also highly desirable since an investment does not have to be made in hard tooling, and the patterns, therefor, can be changed frequently at minimal cost without the need for scrapping or revising tooling.

Laser marking machines have been used in the automotive field for marking certain components and body parts, and in the future the automotive industry will be required to mark more parts and different locations on an automobile body.

One drawback to prior art laser marking machines is that the entire machine i.e. laser control unit, laser collimator and marking head, or "galvohead", are fixed at one particular location with the laser pattern output directed to one fixed marking point.

Laser robots are known, for example in EP-A1-160293, GB-A-2059354, and EP-A1-178011. Such machines are however in general cumbersome, and are insufficiently flexible as would be required to enable them to effect a marking operation, for example in reaching through apertures, or tightly around corners.

Applicant has obviated the difficulties inherent in the prior art laser marking machines by the utilisation of an articulatable robotic machine, which is capable of handling a laser beam internally, thereby presenting a compact assembly which can be manoeuvered in and about an automobile body, for instance, for marking a plurality of positions, in a variety of attitudes.

According to this invention there is provided a laser marking machine comprising a marking head, a laser generator to deliver a laser beam to the marking head, the marking head comprising galvohead means for moving the laser beam delivered thereto through a desired output pattern, control means for controlling the laser generator and control means for controlling the galvohead means, characterised in that the marking head is carried on the end effector on the forward end of a robotic forearm, control means being provided for moving the forearm and for moving the end effector relative to the forearm, and in that the laser generator is connected to the aft end of the robotic forearm to provide a laser beam travelling internally of the forearm from said aft end to said forward end.

Preferably the laser generator is mounted on the forearm, advantageously producing a laser beam directed rearwardly parallel to the longitudinal axis of the forearm, means being provided to reverse the beam into the forearm from the aft end towards the forward end along said axis.

The invention is shown embodied in a laser marking machine, wherein a laser forearm is movable on the robotic structure and has an internal beam path connecting forward and aft ends of the movable forearm. A laser beam source is connected to the aft end of the forearm and provides a laser beam through the forearm. A laser wrist is carried at the forward end of the forearm for receiving and manipulating an internally-carried laser beam, wherein the wrist carries an end effector or tooling plate and has means for automatically moving the tooling plate with respect to the forearm. A laser marker head, or galvohead, is affixed to the tooling plate, the head including conventional galvohead means (e.g. movable mirrors) for moving the laser beam delivered to the galvohead through a predetermined output pattern with respect to the tooling plate. First control means is provided for moving the tooling plate through a predetermined spatial orientations; a second control means is provided for driving the galvohead means to produce the output pattern; and third control means actuates the laser beam source.

There will now be given a detailed description, to be read with reference to the accompanying drawings, of a laser marking machine which is the preferred embodiment of this invention, having been selected for the purposes of illustrating the invention by way of example.

In the accompanying drawings:
FIGURE 1 is a side elevational view of a prior art, fixed station laser marking machine;
FIGURE 2 is a side elevational view of the laser marking machine which is the preferred embodiment of this invention;
FIGURE 3 a is a side elevational section through the aft end of the forearm unit of the marking machine of Figure 2;

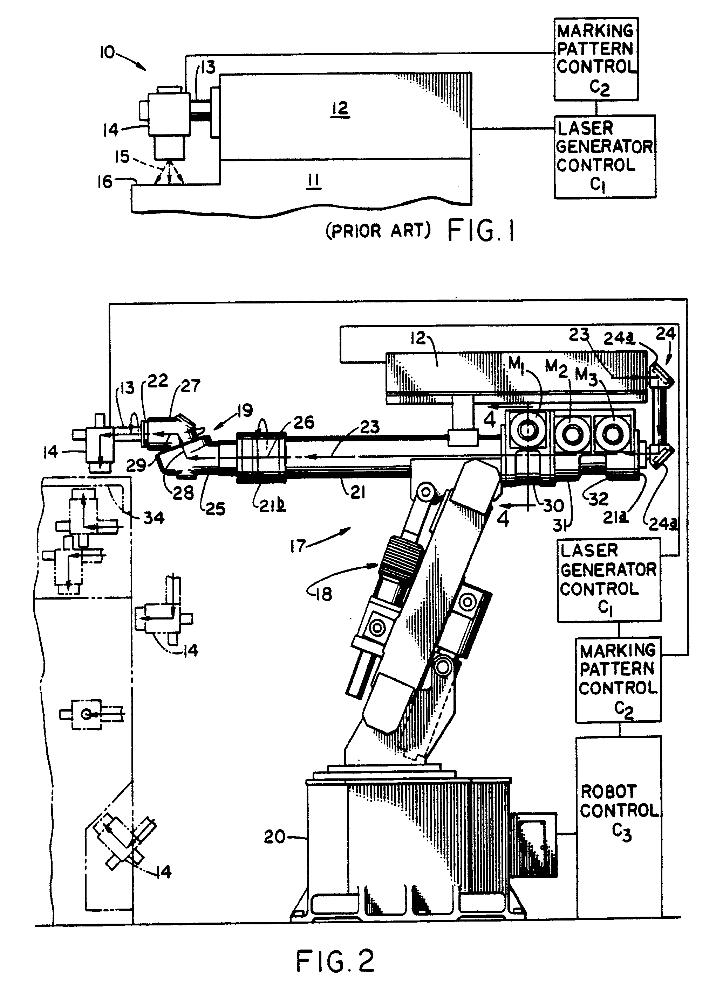

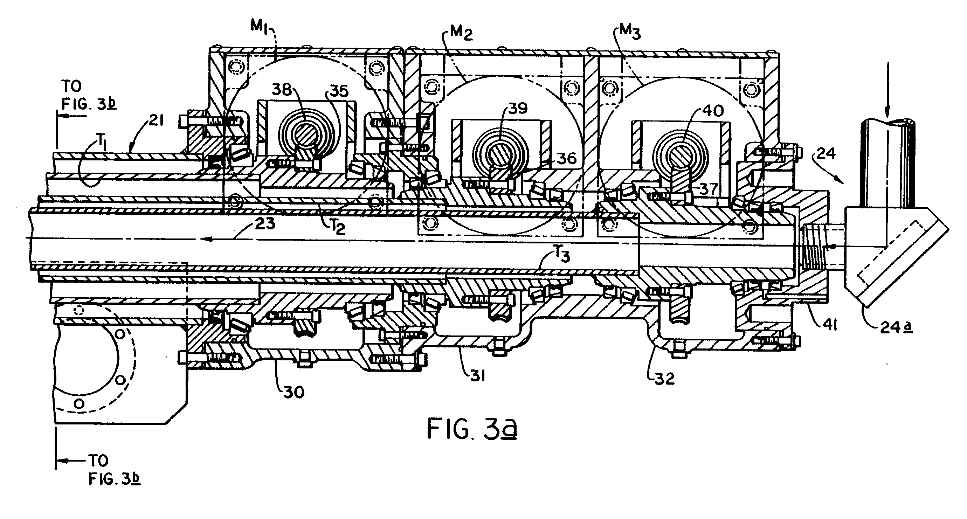

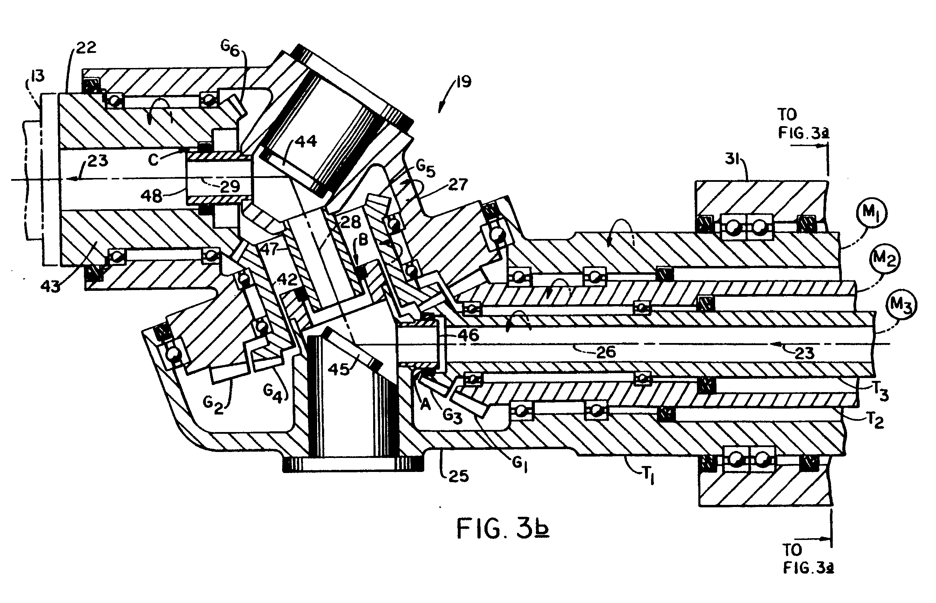

FIGURE 3 b is a side elevational section through the wrist unit and forward end of the forearm unit of the marking machine of Figure 2; and

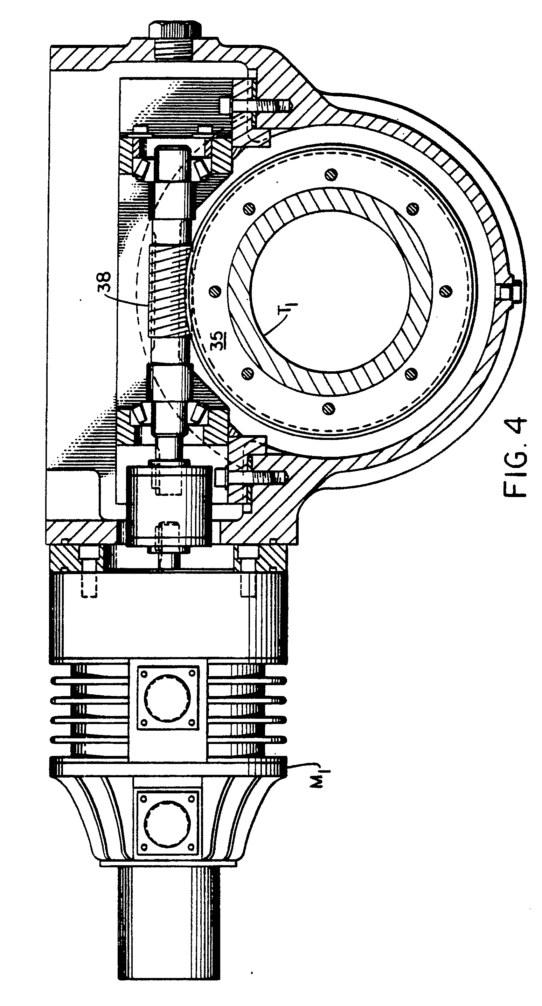

FIGURE 4 is a section through a typical wrist drive motor taken along the line 4-4 of Figure 2.

Figure 1 of the drawings depicts a prior art, fixed-station laser marking machine 10, wherein a station base 11 is provided, and on which is mounted a laser generator unit 12, having a laser beam collimator 13 attached to its output end, in turn supporting a laser marking head, or galvohead 14. A laser generator control C1 is provided to control the laser output, and a marker pattern control C2 is provided to control the galvohead 14, so that the laser beam 15 will produce a predetermined marking pattern on a target surface 16. Typical patterns might be used to mark part numbers, or to produce Designs, Trade Marks, etc. The galvohead 14 is capable of a high response rate in directing the beam 15 through a pattern.

In the robotic marking machine which is the preferred embodiment of this invention depicted in Figure 2, the laser generator unit 12 is separated from the galvohead 14 and collimator 13. A unique articulatable laser robot 18 is depicted, and is capable of moving a wrist unit 19 through a variety of multi-spatial orientations with respect to the robotic base 20. The laser robot 18 is the subject of copending USA Patent Application Serial No. 840,637 (EPA No: 0238308) the disclosure of which is incorporated by reference herein. Reference may also be had to USA Patent 4626999 (Application Serial No. 601784) depicting a laser generator mounted end-for-end the reverse of the present design.

The laser generator unit 12 is mounted proximal to the aft end 21 a of the robotic forearm 21, and the galvohead 14 is affixed to a tooling plate 22 at the wrist unit 19 on the forward end 21 b of the forearm 21. The laser generator unit 12 produces an output laser beam 23 having an exit path directed generally towards the aft end 21 a and which is ducted through a light pipe system 24 including a pair of 90° mirror units 24 a and into the aft end 21 a of the forearm 21, wherein the beam 23 travels internally through the forearm 21 and wrist unit 19, subsequently exiting through the collimator and galvohead 14.

The wrist unit 19 comprises a base housing 25 which is mounted for movement about a first roll axis 26 of the forearm 21, and the base housing 25 supports a turret housing 27, which is power-driven around a second roll axis 28 intercepting the first roll axis 26. The turret housing 27 carries the rotatable tooling plate 22 which is free to rotate about a third roll axis 29, intersecting the second roll axis 28, said roll axes 26, 28 and 29 defining a laser beam path. Thus, "three-roll" movement may be employed, fully manipulating the galvohead 14 and laser beam 23. The wrist unit 19 is power-driven by three motors M1, M2, and M3, which are remotely located on suitable gear boxes 30, 31, 32 at the aft end 21 a of the forearm 21.

A robotic control C3 is employed, and is coordinated with the laser control C1 and the marking pattern control C2. While the units have been depicted as separate, it will be appreciated that they may be embodied within a common control console. Thus, in use, the galvohead is positioned in relation to a workpiece by the robotic control C3, and the galvohead means is controlled by the control means C2 (whilst the control C1 controls generation of the laser beam) to produce the required marking of the part. A typical workpiece 33 is depicted in phantom, at which the galvohead 14 is shown oriented to a variety of spatial positions, to mark the various surfaces. The galvohead 14 may be also transported within a cavity 34 of the workpiece 33 and such a workpiece 33 might comprise an automobile body, for example.

Referring the Figures 3 a i.e. a section through the forearm 21, a plurality of concentric drive tubes, T1, T2, and T3 are provided with worm wheels 35, 36, 37, which are driven respectively by worms 38, 39, 40 connected to the respective drive motors, M1, M2 and M3 (see Figure 4). The laser beam 23 is received from the closed light pipe system 24 through the 90° mirror unit 24a at the cap 41 at the rear of the unit. Complete sealing is provided on the T1, T2, T3 tubes, so that the beam path will remain clear of contamination. Referring to the continuation of the unit at Figure 3b, a simplified digrammatic view of the wrist unit 19 of Figure 2 is depicted, and as stated above, the three concentric drive tubes, T1, T2 and T3 are driven by respective drive motors M1, M2 and M3 in the non-rotating forearm 2l. The simplified structure shows that the drive tube T1 provides the roll 1 movement i.e., complete wrist rotation around the roll 1 axis 26. A bevel gear G1 on drive tube T2 serves to provide the rotational movement to the turret housing 27, around the roll 2 axis 28, since gears G1 and G2 (on the turret housing 27) are in mesh. In order to provide rotary movement of the tooling plate 22, the innermost drive tube T3 has a bevel gear G3 located at its inboard end, in mesh with the gear G4 of a rotary spindle 42 supported in the turret housing 27. The spindle 42 also has a gear G5 at its opposite end, in mesh with the gear G6 of the tooling plate spindle 43 so that the tooling plate 22 will rotate around the roll 3 axis 29. Mirrors 44, 45 are supported as shown, within the respective turret housing 27 and base housing 25. Here it may be appreciated that while fixed mirror assemblies are depicted, the units may be provided with adjustable mounts, as are fully depicted in said copending Application, Serial No. 840,637. The sealing tubes 46, 47 and 48 are sealed at seal points A, B and C, to provide a closed path for the laser beam 23.

The laser collimator of Figures 1 and 2 is shown affixed to the tooling plate 22, and is therefore movable through a wide variety of multi-spatial orientation with respect to the robotic base 20.

**Claims**

1. A laser marking machine comprising a marking head (14), a laser generator (12) to deliver a laser beam to the marking head, the marking head comprising galvohead means for moving the laser beam delivered thereto through a desired output pattern, control means (C1) for controlling the laser generator and control means (C2) for controlling the galvohead means, characterised in that the marking head (14) is carried on the end effector (22) on the forward end (21b) of a robotic forearm (21), control means (C3) being provided for moving the forearm (21) and for moving the end effector (22) relative to the forearm, and in that the laser generator (12) is connected to the aft end (21a) of the robotic forearm (21) to provide a laser beam travelling internally of the forearm from said aft end to said forward end (21b).

2. A machine according to Claim 1 wherein the laser generator (12) is mounted on the forearm (21).

3. A machine according to one of Claims 2 and 3 wherein the laser generator is operative to produce a laser beam (23) directed rearwardly parallel to a longitudinal axis of the forearm (21), means (24a, 24b) being provided to reverse the beam into the forearm (21) from the aft end (21a) towards the forward end (21b) along said axis.

**Revendications**

1. Machine de marquage au laser comprenant une tête de marquage (14), un générateur laser (12) pour fournir un faisceau laser à la tête de marquage, la tête de marquage étant constituée par une tête galvanique pour le déplacement du faisceau laser amené sur celle-ci selon un dessin de sortie souhaité, des moyens de commande (C1) servant à commander le générateur laser et des moyens de commande (C2) à commander la tête galvanique, caractérisée en ce que la tête de marquage 14 est montée sur l'effecteur d'extrémité (22) sur l'extrémité avant (21b) d'un avant-bras de robot (21), des moyens de commande C3 étant prévus pour déplacer l'avant-bras (21) et pour déplacer l'effecteur d'extrémité (22) par rapport à l'avant-bras, et en ce que le générateur laser (12) est relié à l'extrémité arrière (21a) de l'avantbras du robot (21) pour fournir un faisceau laser se déplaçant à l'intérieur de l'avantbras à partir de l'extrémité arrière jusqu'à l'extrémité avant (21b).

2. Machine selon la revendication 1, dans laquelle le générateur laser (12) est monté sur l'avant-bras (21).

3. Machine selon l'une des revendications 2 et 3 dans laquelle le générateur laser est opérant pour produire un faisceau laser (23) dirigé vers l'arrière parallèlement à un axe longitudinal de l'avant-bras (21), des moyens 24a, 24b étant prévus pour inverser le faisceau jusque dans l'avant-bras (21) à partir de l'extrémité arrière (21a) en direction de l'extrémité avant (21b) le long de cet axe.

**Patentansprüche**

1. Lasermarkierungsgerät, mit einem Markierungskopf (14), einem Lasergenerator (12) zum Liefern eines Laserstrahls zu dem Markierungskopf, wobei der Markierungskopf Galvokopfmittel aufweist zum Bewegen des angelieferten Laserstrahls in einem gewünschten Ausgangsmuster, Steuermittel (C1) zum Steuern des Lasergenerators und Steuermittel (C2) zum Steuern der Galvokopfmittel, dadurch gekennzeichnet, daß der Markierungskopf (14) an dem Endwirkungselement (22) an dem vorderen Ende (21b) eines Roboterarms (21) angeordnet ist, und Steuermittel (C3) vorhanden sind zum Bewegen des Arms (21) und zum Bewegen des Endwirkungselements (22) relativ zu dem Arm, und dadurch, daß der Lasergenerator (12) mit dem hinteren Ende (21a) des Arms des Roboters verbunden ist, um einen Laserstrahl zu erzeugen, der sich innerhalb des Arms von dem hinteren Ende zu dem vorderen Ende (21b) fortpflanzt.

2. Gerät nach Anspruch 1, wobei der Lasergenerator (12) an dem Arm (21) montiert ist.

3. Gerät nach einem der Ansprüche 1 und 2, wobei der Lasergenerator zur Erzeugung eines Laserstrahls (23) betrieben wird, der nach hinten parallel zu einer Längsachse des Arms (21) ausgerichtet ist, und wobei Mittel (24a, 24b) vorgesehen sind zum Umkehren des Strahls in dem Arm (21) von dem hinteren Ende (21a) zu dem vorderen Ende (21b) entlang der Achse.

(PRIOR ART) FIG.1

FIG.2

FIG. 3a

FIG. 3b

FIG. 4

EP 0 265 661 B1